# EUROPEAN PATENT SPECIFICATION

(11) **EP 3 690 890 B1**
(45) Date of publication and mention of the grant of the patent: **16.10.2024**
(21) Application number: 18792834.6
(22) Date of filing: 29.03.2018
(51) Int. Cl.: G21C 3/33, G21C 3/334, G21C 3/32

(54) **NUCLEAR REACTOR FUEL ASSEMBLY**
KERNBRENNSTABBÜNDEL
ASSEMBLAGE DE COMBUSTIBLE DE RÉACTEUR NUCLÉAIRE

(30) Priority: 29.09.2017 RU 2017133876
(43) Date of publication of application: 05.08.2020
(73) Proprietor: Joint-Stock Company "TVEL", Moscow 115409 (RU)
(72) Inventor: IVANOV, Roman Sergeevich, Novosibirsk 630110 (RU); VASILCHENKO, Ivan Nikitovich, Poselenie Ryazanovskoe Moscow 108822 (RU); VYALITSYN, Viktor Vasil'evich, Podolsk 142115 (RU); KUSHMANOV, Sergey Aleksandrovich, Podolsk 142108 (RU); VASILCHENKO, Roman Ivanovich, Podolsk 142100 (RU); POLYAKOV, Dmitry Leonidovich, Novosibirsk 630129 (RU)
(74) Representative: Friese Goeden Patentanwälte PartGmbB
(86) International application number: PCT/RU2018/000204
(87) International publication number: WO 2019/066681

(56) References cited:
- KR-A- 20100 063 541
- RU-C1- 2 079 170
- RU-C2- 2 214 010
- RU-C2- 2 256 243
- US-A- 4 427 624
- US-A- 4 526 744
- US-A- 4 667 547

## Description

### Field of the invention

The invention relates to nuclear-power engineering and, more particularly, to fuel assemblies of nuclear reactors with water under pressure (VVER type reactors).

### Background of the invention

There is known VVER-1000 nuclear reactor fuel assembly, comprising a bundle of fuel elements, installed in the frame of spacer grids, fastened at the frame tubular channels, which are installed in the lower grid with a bottom nozzle (Patent RU 2079170, IPC G21C3/32 (2016/01) is adopted as the prototype.

The main disadvantage of the prototype is that the lower grid has a rigid connection with the FA bottom nozzle along the perimeter only, while being itself supported from underneath by bottom nozzle ribs.

Thus, the deformation of the lower grid is possible, not considered in the design, at loading with axial force upwards, which may occur during FA extraction operations when the bottom nozzle is jammed in the support, or when working in the reactor in modes, assuming fuel elements bundle is lengthened or shortened. The lower grid thickness is increased to solve the issue. This increases the metal content of the fuel assembly lower grid and the labor input at its manufacture. Due to the increase in the height of the spillway apertures in the lower grid, the hydraulic resistance at the lower, non-heated section of the fuel assembly increases.

Another fuel assembly with central pins and bushings is known from Patent RU 2256243.

### Summary of the invention

The object to be solved with the claimed invention is the fuel assembly reliability enhancement and the reducing of its manufacturing cost.

The technical result of the invention is the creation of a fuel assembly design with a lower grid, having a rigid connection with the FA bottom nozzle ribs, which allows to reduce the lower grid thickness and to reduce the hydraulic resistance at the lower, non-heated section of the fuel assembly.

The technical result is provided by the inventive fuel assembly according to claim 1.

### Brief description of the drawings

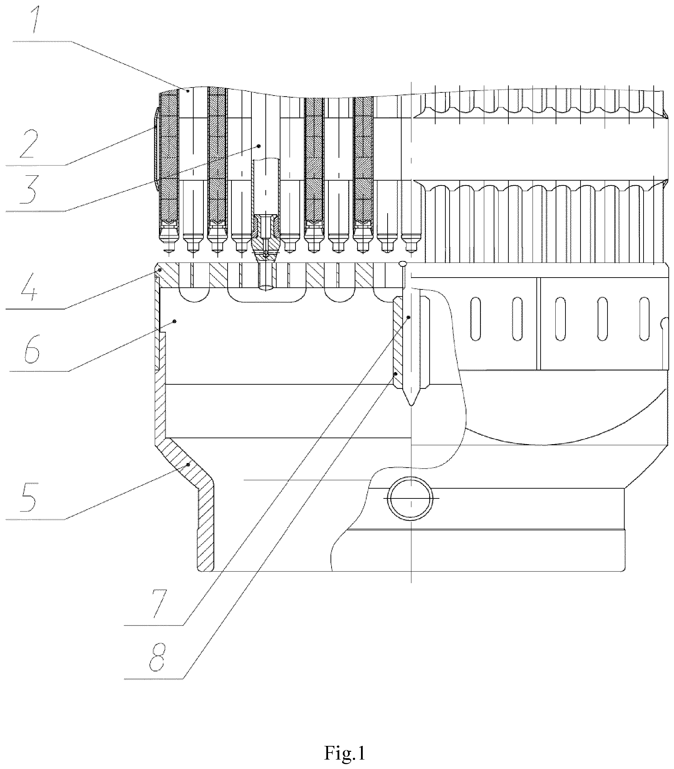

The invention is explained by the drawing. Fig.1 shows the fuel assembly with lower, non-heated section.

### Detailed description of the invention

The nuclear reactor fuel assembly, comprising the fuel elements bundle (1), spacer grids (2) and tubular channels (3), the lower grid (4) and the bottom nozzle (5) with ribs (6), differs from known analogues in that the lower grid is provided with a central pin (7), and the bottom nozzle ribs (6) are provided with a bushing (8), wherein the central pin (7) and the bushing (8) are joined fixedly.

They assemble the fuel assembly from spacer grids (2), tubular channels (3), the lower grid (4) with the central pin (7). Then, they install the fuel elements bundle (1) into the fuel assembly, and then the fuel elements bundle (1) is being joined with the bottom nozzle (5), wherein the central pin (7) is being installed into the bushing (8) of the bottom nozzle (5). After the lower end of the lower grid (4) is secured against the support surfaces of the bottom nozzle ribs (6), they weld the central pin (7) to the bushing (8), and they weld the angle sections of the lower grid (4) to the bottom nozzle (5) faces, similarly to the corresponding welding in the prototype structure.

The device operates as follows. The central pin of the lower grid with reduced metal content, fixed in the bottom nozzle bushing, ensures the form stability of the lower grid under effects of weight, hydraulic and vibration loads in the nuclear reactor. Due to the decrease in the thickness of the lower grid, the hydraulic resistance at the lower non-heated section of the fuel assembly reduces, which allows to achieve reduction of the hydraulic resistance of the entire fuel assembly in whole.

### Industrial applicability

It is the most reasonable to use the proposed solutions in the reactor cores of nuclear reactors with water under pressure (VVER type reactors) for fuel assemblies with fuel elements without fixing in the lower grid.

## Claims

1. Fuel assembly of a nuclear reactor comprising a bundle of fuel rods(1), spacer grids (2), tubular channels (3), a lower grid (4) and a bottom nozzle (5) with ribs (6) and faces,
**characterized in that** the lower grid (4) has a central pin (7), and the ribs (6) of the bottom nozzle (5) have a bushing (8), wherein the central pin (7) and the bushing (8) are rigidly connected by welding and angle sections of the lower grid (4) are welded to the faces of the bottom nozzle (5).

## Patentansprüche

1. Brennelement eines Kernreaktors mit einem Bündel von Brennstäben (1), Abstandsgittern (2), rohrförmigen Kanälen (3), einem unteren Gitter (4) und einem Bodenstutzen (5) mit Rippen und Flächen,
**dadurch gekennzeichnet, dass** das untere Gitter (4) einen zentralen Stift (7) aufweist und die Rippen (6) des Bodenstutzens (5) eine Buchse (8) aufweisen, wobei der zentrale Stift (7) und die Buchse (8) durch Schweißen starr verbunden sind und Winkelabschnitte des unteren Gitters (4) mit den Flächen des Bodenstutzens (5) verschweißt sind.

## Revendications

1. Assemblage de combustible d'un réacteur nucléaire comprenant un faisceau de barres de combustible (1), des grilles d'espacement (2), des canaux tubulaires (3), une grille inférieure (4) et un embout inférieur (5) avec des nervures (6) et des faces,
**caractérisé en ce que** la grille inférieure (4) comporte une broche centrale (7), et les nervures (6) de l'embout inférieur (5) comportent une bague (8), la broche centrale (7) et la bague (8) étant reliées rigidement par soudage, et les sections d'angle de la grille inférieure (4) étant soudées aux faces de l'embout inférieur (5).
